# EUROPÄISCHE PATENTANMELDUNG

(11) **EP 1 055 443 A1**
(43) Veröffentlichungstag der Anmeldung: **29.11.2000**
(21) Anmeldenummer: 00110330.8
(22) Anmeldetag: 13.05.2000
(51) Int. Cl.: B01D 29/74

(54) **Vorrichtung zur Trennung eines Phasengemisches**

(30) Priorität: 19.05.1999 DE 19923130
(71) Anmelder: KNOLL MASCHINENBAU GMBH, 88348 Bad Saulgau (DE)
(72) Erfinder: Knobelspies, Manfred, 78256 Steisslingen (DE)
(74) Vertreter: Patentanwälte Eisele, Otten, Roth & Dobler

(57) **Zusammenfassung**

Es wird eine Vorrichtung (1) zur Trennung eines Phasengemisches aus einer festen und einer flüssigen Phase mit einem von der flüssigen Phase durchströmten, drehsymmetrischen Filterelement (10) vorgeschlagen, bei dem eine verbesserte Filterreinigung möglich ist. Dies wird dadurch erreicht, daß zur Filtereinigung eine Umkehr der Strömungsrichtung der flüssigen Phase bei gleichzeitiger Rotation des Filterelementes (10) vorgesehen ist.

## Beschreibung

Die Erfindung betrifft eine Vorrichtung zur Trennung eines Phasengemisches nach dem Oberbegriff des Anspruchs 1.

Derartige Phasengemische treten beispielsweise bei metallbearbeitenden Maschinen auf, in denen ein Kühlschmiermittel-Kreislauf im Einsatz ist. Dieses Kühlschmiermittel transportiert Verschmutzungen und Metallspäne vom Bearbeitungsort der Werkstücke fort, und sorgt für eine Schmierung und Kühlung am Bearbeitungsort. Für den Dauerbetrieb des Kühlschmiermittel-Kreislaufs muß das verschmutzte Kühlschmiermittel aufbereitet werden, wozu üblicherweise Filter zum Einsatz kommen.

Im Laufe der Zeit werden derartige Filter entsprechend verschmutzt und zugesetzt, so daß entweder die Filtereinsätze getauscht oder aber eine Filterreinigung durchgeführt werden muß.

Zur Reinigung solcher Filtereinsätze sind bereits rückspülbare Filter bekannt geworden, bei denen das entsprechende Filterelement durch Umkehrung der Strömungsrichtung wieder freigespült und das zur Freispülung verwendete Medium abgezogen wird. Weiterhin sind sogenannte Schleuderfilter in Verwendung, bei denen der am Filtereinsatz niedergeschlagene Filterkuchen durch schnelle Rotation abgeschleudert und anschließend aus dem Filtergehäuse entfernt wird.

Gerade im Bereich der Kühlschmiermittel sind jedoch unterschiedlichste Verunreinigungen aus der Flüssigphase zu entfernen. Grobe Metallspäne liegen hier ebenso vor wie feinste Schmutzpartikel, wobei erschwerend hinzukommt, daß das Kühlschmiermittel selbst für eine entsprechend gute Haftung von Verunreinigungen an einem entsprechenden Untergrund, beispielsweise dem Filterelement sorgt. Die Filterreinigung mit den bislang bekannten Maßnahmen ist daher häufig problematisch.

Demgegenüber hat die Erfindung die Aufgabe, eine Vorrichtung zur Phasentrennung eines Phasengemisches aus einer flüssigen und einer festen Phase vorzuschlagen, bei dem eine besonders zuverlässige Reinigung des entsprechenden Filterelementes möglich ist.

Diese Aufgabe wird ausgehend von Vorrichtungen der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung zur Trennung eines Phasengemisches dadurch aus, daß zur Reinigung des Filterelementes eine Umkehr der Strömungerichtung der flüssigen Phase bei gleichzeitiger Rotation des Filterelementes vorgesehen ist. Durch das gleichzeitige Abschleudern und Rückspülen ergibt sich eine bessere Reinigung des Filterelementes. Schmutzpartikel werden einerseits durch die Fliehkraft der Schleuderbewegung vom Filterelement abgelöst und zugleich durch das rückspülende flüssige Medium weggefördert. Durch die Rotation des Filterelementes innerhalb der flüssigen Phase ergibt sich eine Anströmung des Filterelementes, die zusätzlich für eine gute Spülung des Filterelementes sorgt.

Vorteilhafterweise wird die erfindungsgemäße Vorrichtung, insbesondere durch die Anordnung von Zu- bzw. Abfluß so ausgebildet, daß die Strömungsrichtung beim Filtern durch das Filterelement von außen nach innen und bei der rückspülenden Filterreinigung von innen nach außen erfolgt, so daß sich aufgrund der einsetzenden Fliehkräfte eine Pumpenwirkung beim schnellen Drehen des Filterelementes ergibt. Das Filterelement dient gewissermaßen als Pumpenrotor, der die zum Rückspülen benötigte Flüssigkeit aus der Reinphasenleitung ansaugt und in Rückspülrichtung durch den Filtereinsatz drückt. Hierdurch ist eine externe Pumpe zum Rückspülen des Filtereinsatzes nicht mehr erforderlich, da diese Pumpwirkung durch den Schleuderfilter übernommen wird.

Zur Verbesserung dieser Pumpenwirkung ist es vorteilhaft, wenn wenigstens ein zusätzliches Leitelement am Filterelement vorgesehen wird. Ein derartiges Leitelement, beispielsweise in Form von radial abstehenden Leisten oder dergleichen unterstützt die Rotationsbewegung der in der Filterkammer befindlichen Flüssigkeit und somit aufgrund der Fliehkraft die Entstehung eines Druckgefälles in radialer Richtung von innen nach außen hin, so daß eine bessere Pumpleistung durch einen derartigen Filtereinsatz zu erzeugen ist.

Vorzugsweise wird eine zylinderförmige Filterkammer vorgesehen, in der ein zylinderförmiges Filterelement zentrisch angeordnet ist. Diese Ausbildung kommt der Verwendung des Filtereinsatzes als Pumpenrotor entgegen.

Weiterhin ist es von besonderem Vorteil, wenn die Filterkammer einen tangentialen Einlaß aufweist. Hierdurch ergibt sich beim Einströmen während des normalen Filterbetriebes eine kreisende Flüssigkeitsströmung entlang der Wandung der Filterkammer, so daß auch während des normalen Filterbetriebes Fliehkräfte im Innern der Filterkammer auftreten, durch die grobe Verunreinigungen wie Metallspäne oder dergleichen an die Innenseite der Außenwand der Filterkammer gefördert werden und sich dort nach unten absetzen. Diese Sedimentation sorgt dafür, daß der Filtereinsatz selbst gar nicht mehr durch diese Grobschmutzpartikel belastet wird.

Besonders in Kombination mit dieser Weiterbildung der Erfindung ist ein unterer Abfluß für die Sedimentationsrückstände von Vorteil. Somit können die groben Partikel aus der flüssigen Phase abgetrennt und aus der Filterkammer entnommen werden, ohne daß diese mit dem Filtereinsatz in Kontakt kommen.

Dieser untere Abfluß wird vorzugsweise exzentrisch an der Filterkammer angebracht, so daß er problemlos neben einem als Pumpenrotor dienenden Filtereinsatz mit zentrischem Reinphasenablauf für die gereinigte flüssige Phase angeordnet werden kann. Der zentrische achsenparallele Reinphasenablauf aus dem Filterelement wiederum erleichtert dessen drehbare Lagerung und Abdichtung.

In einer besonders vorteilhaften Ausführungsform wird der untere Abfluß ebenfalls tangential zum Filtergehäuse bzw. der Filterkammer angeordnet. Diese Ausbildung ist von Vorteil, wenn die Sedimentationsrückstände während einer kreisförmigen Strömung im Innern der Filterkamnmer abgezogen werden. Der tangentiale Abfluß sammelt gewissermaßen alle Rückstände ein, die an ihm vorbeistreichen. Durch die entsprechende Strömung wird zugleich der Bodenbereich der Filterkammer freigespült.

Besonders vorteilhaft ist die tangentiale Anordnung des Auslasses dann, wenn der Abzug des Grobschmutzes zeitgleich mit der Reinigung des Filtereinsatzes erfolgt. In diesem Fall ist für die Filterreinigung der obere Zulauf durch geeignete Mittel, z. B. ein entsprechendes Ventil zu verschließen und der untere tangentiale Abschluß zu öffnen. Nach dem Einsetzen der Rotation des Schleuderfilters wird in einem Vorgang saubere Flüssigkeit durch die Pumpwirkung des Schleuderfilters angesaugt, der Filtereinsatz in einer Rückströmung freigespült und abgeschleudert und die für den Abzug des Grobschmutzes vorteilhafte Kreisströmung im Innern der Filterkammer erzeugt. Durch den unteren Abfluß wird in diesem Fall nicht nur der Grobschmutz, sondern auch die zum Reinigen des Filtereinsatzes benützte und dementsprechend verunreinigte Flüssigkeit entfernt.

Nach diesem Vorgang steht somit die erfindungsgemäße Vorrichtung vollständig gereinigt wieder zum Einsatz im entsprechenden Flüssigkeitskreislauf zur Verfügung.

Vorzugsweise wird ein Auffangbehälter unter dem Reinphasenablauf vorgesehen. Dies erleichtert die Konstruktion der Lagerung des drehbaren Filtereinsatzes im Bodenbereich der erfindungsgemäßen Vorrichtung, da aufgrund des darunter befindlichen Auffangbehälters keine großen Anforderungen an die Dichtigkeit in diesem Bereich vorliegen. Um eine ausreichende Ansaugwirkung von sauberer Flüssigkeit während dem Rückspülen zu gewährleisten, kann ein entsprechend langer, in die im Auffangbehälter befindliche Flüssigkeit eintauchender Stutzen angebracht werden.

Vorzugsweise wird die Filterkammer unter Verwendung einer rohrförmigen Hülse, zweier Endflansche sowie Spannelementen in erforderlicher Anzahl aufgebaut. Hierdurch ist ein kostengünstiger Aufbau gewährleistet, der unter anderem auch flexibel modifiziert werden kann. Die Endflansche können für den jeweiligen Einsatzzweck ausgebildet werden, wobei stets die gleiche Hülse und die gleichen Spannelemente zu verwenden sind. Auch die Hülse kann den Anforderungen entsprechend modifiziert werden, beispielsweise hinsichtlich der Materialauswahl, bei der unter anderem auch die stoffliche Beschaffenheit der zu reinigenden Flüssigkeit zu berücksichtigen ist.

Weiterhin wird in einer bestimmten Ausführungsform der Erfindung ein Zwischenstück zwischen der Filterkammer bzw. dem Filtergehäuse und dem Antriebsmotor vorgesehen, wodurch die Flexibiliät für unterschiedliche Einsätze weiter verbessert wird. Das Zwischenstück kann beispielsweise zur Anpassung an unterschiedliche Antriebsmotoren, unterschiedlich lange Antriebsachsen usw. verwendet werden.

Ein Ausführungsbeispiel der Erfindung ist in der Zeichnung dargestellt und wird anhand der Figuren nachfolgend näher erläutert.

Im einzelnen zeigen
- Fig. 1: eine perspektivische Darstellung einer erfindungsgemäßen Vorrichtung und
- Fig. 2: einen Längsschnitt durch eine erfindungsgemäße Vorrichtung.

Die Vorrichtung 1 gemäß den Figuren umfaßt ein Gehäuse 2, das aus zwei Endflanschen 3, 4 und einer Hülse 5 gebildet wird, die durch Zuganker 6 verspannt sind. In die Zuganker 6 sind beidseits Schrauben 7, 8 eingeschraubt, die in die Endflansche 3, 4 eingelassen sind.

Im Innern des Gehäuses befindet sich die Filterkammer 9, in der zentrisch das Filterelement 10 angeordnet ist. Das Filterelement 10 ist zwischen zwei drehbaren Aufnahmen 11, 12 eingespannt. Der Abstand zwischen den Aufnahmen 11, 12 ist durch einen Abstandshalter 13 vorgegeben, der verhindert, daß das Filterelement 10 einen zu starken Druck in axialer Richtung erfährt.

Die obere Aufnahme 11 ist über ein Kugellager 14 gelagert und mittels eines Radialwellendichtrings 15 gegenüber dem Endflansch 3 abgedichtet. Die obere Aufnahme 11 geht über in die Antriebswelle 16 für den Drehantrieb des Filterelementes 10. Die Antriebswelle 16 ist über ein Kupplungsstück 17 mit der Antriebswelle 18 eines Elektromotors 19 drehfest verbunden. Ein Zwischenstück 20 dient der Befestigung des Motors 19 am Endflansch 3 und sorgt für den richtigen Abstand zwischen den beiden Antriebswellen 16, 18.

Die untere Aufnahme 12 ist ebenfalls über ein Kugellager 21 gelagert und mittels eines weiteren Radialwellendichtrings 22 gegenüber dem Endflansch 4 abgedichtet. Die untere Aufnahme 12 geht über in einen Auslaßstutzen 23.

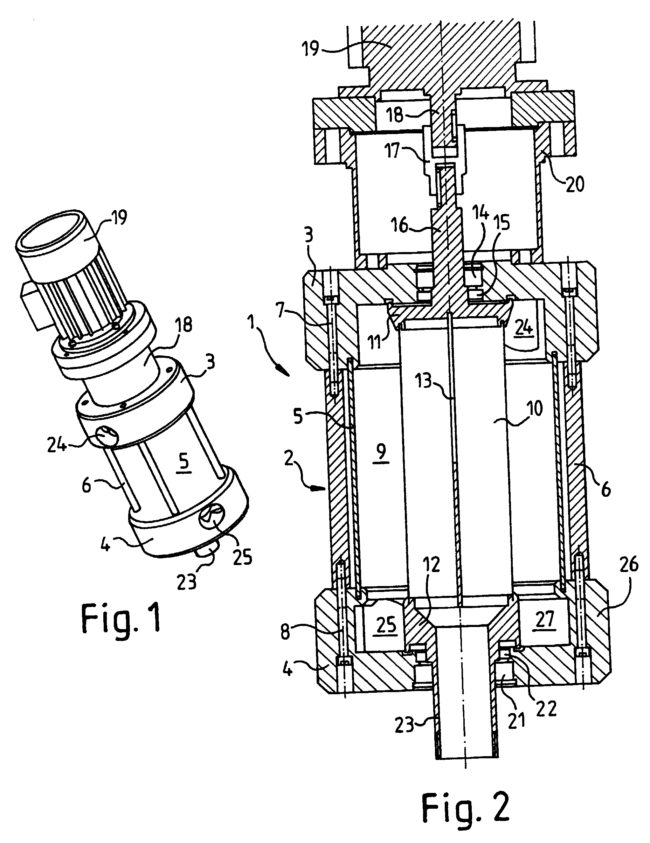

Wie insbesondere in Fig. 1 ersichtlich ist ein tangentialer Einlaß 24 im oberen Endflansch 3 angebracht. Ein ebenfalls tangentialer Auslaß 25 befindet sich im unteren Endflansch 4.

Die erfindungsgemäße Vorrichtung wird folgendermaßen betrieben. Im Filterbetrieb wird das zu filternde Phasengemisch durch den Einlaß 24 eingeleitet. Durch die tangentiale Anordnung des Einlasses 24 ergibt sich eine kreis- bzw. spiralförmige Strömung im Innern der Filterkammer 9. Hierbei wird Grobschmutz, beispielsweise in Form von Metallspänen oder dergleichen durch die Fliehkraft nach außen gedrängt. Diese Grobschmutzpartikel setzen sich im Bodenbereich in der zwischen einem Bund 26 des Endflansches 4 und der Aufnahme 12 gebildeten Ringnut 27 ab. Hierdurch bleibt das eigentliche Filterelement 10 von der Belastung durch Grobschmutz verschont.

Durch einen entsprechenden Einlaßdruck ergibt sich ein Druckgefälle zwischen dem Einlaß 24 und dem Auslaßstutzen 23, so daß das zu filternde Medium durch das Filterelement 10 gegen die Fliehkraft nach innen gedrückt wird und durch den Auslaßstutzen 23 in axialer Richtung ausströmen kann. Unterhalb des Auslaßstutzens 23 wird vorzugsweise ein nicht näher dargestellter Auffangbehälter angebracht.

Beim Durchtritt durch das Filterelement 10 werden Schmutzpartikel zurückgehalten, so daß sich ein Filterkuchen auf der Außenseite des Filterelements 10 bildet. Nach einer gewissen Betriebsdauer ist das Filterelement 10 derart zugesetzt, daß eine Regeneration erfolgen muß. Zugleich hat sich eine entsprechende Menge von Grobschmutz im Bodenbereich des Endflansches 4 abgesetzt.

Nun wird über ein entsprechendes, nicht näher dargestelltes Ventil die Zufuhr durch den Einlaß 24 gesperrt. Im Gegenzug wird ebenfalls über ein nicht näher dargestelltes Ventil der Auslaß 25, der im oben beschriebenen Filterbetrieb gesperrt war, geöffnet. Mit dem Starten des Elektromotors 19 beginnt das Rotieren des Filterelementes 10 mit vergleichsweise hoher Drehzahl, beispielsweise größer als fünfhundert Umdrehungen pro Minute. Durch die dabei entstehende Rotation der in der Filterkammer 9 befindlichen Flüssigkeit entsteht ein Druckgefälle von innen nach außen, wodurch bereits gereinigte Flüssigkeit von unten über den Ablaufstutzen 23 angesaugt wird. Die drehende Strömung im Innern der Filterkammer 9 bewirkt zugleich, daß der in der Ringnut 27 befindliche Grobschmutz durch den tangentialen Auslaß 25 ausgespült wird.

Somit wird in einem Arbeitsgang der in der Ringnut 27 abgesetzte Grobschmutz abgezogen und das Filterelement 10 rückgespült, wobei die zum Rückspülen verwendete Flüssigkeit ebenfalls durch den Auslaß 25 entfernt wird.

Das Rückspülen findet bei einer schnellen Rotation des Filterelementes 10 statt, so daß neben der Spülwirkung auch ein Schleudereffekt für die Reinigung des Filterelementes 10 einsetzt. Weiterhin zeugt die schnelle Rotation innerhalb der Flüssigkeit für einen Reibeffekt zwischen der in Rotation versetzten Flüssigkeit und dem Filterelement 10, so daß eine zusätzliche Reinigungswirkung erzielt wird.

Nach einer bestimmten Zeitdauer dieser Art der Filterreinigung ist das Filterelement 10 wieder frei, wonach der Auslaß 25 geschlossen wird und die Vorrichtung 1 wieder zur Reinigung des Zweiphasengemisches zur Verfügung steht. Der Zulauf 24 kann nun wieder geöffnet werden.

Durch die Kombination der Rückspülwirkung mit der Schleuderwirkung können auch sehr fest haftende Partikel des Filterkuchens vom Filterelement 10 abgelöst und aus der Filterkammer 9 ausgespült werden.

### Bezugszeichenliste:

- 1: Vorrichtung
- 2: Gehäuse
- 3: Endflansch
- 4: Endflansch
- 5: Hülse
- 6: Zuganker
- 7: Schraube
- 8: Schraube
- 9: Filterkammer
- 10: Filterelement
- 11: Aufnahme
- 12: Aufnahme
- 13: Abstandhalter
- 14: Kugellager
- 15: Radialwellendichtung
- 16: Antriebswelle
- 17: Kupplungsstück
- 18: Antriebswelle
- 19: Elektromotor
- 20: Zwischenstück
- 21: Kugellager
- 22: Radialwellendichtung
- 23: Auslaßstutzen
- 24: Einlaß
- 25: Auslaß
- 26: Bund
- 27: Ringnut

## Patentansprüche

1. Vorrichtung zur Trennung eines Phasengemisches aus einer festen und einer flüssigen Phase mit einem von der flüssigen Phase durchströmten Filterelement, dadurch gekennzeichnet, daß zur Filterreinigung eine Umkehr der Strömungsrichtung der flüssigen Phase bei gleichzeitiger Rotation des Filterelementes (10) vorgesehen ist.

2. Vorrichtung nach Anspruch 1, dadurch gekennzeichnet, daß die Strömungsrichtung im Filterbetrieb durch das Filterelement (10) von außen nach innen und bei der Filterreinigung von innen nach außen erfolgt, so daß das drehbare Filterelement (10) als Pumpenrotor für die Rückspülung verwendbar ist.

3. Vorrichtung nach einem der vorgenannten Ansprüche, dadurch gekennzeichnet, daß ein zusätzliches Leitelement an dem Filterelement (10) vorgesehen ist.

4. Vorrichtung nach einem der vorgenannten Ansprüche, dadurch gekennzeichnet, daß eine zylinderförmige Filterkammer (9) vorgesehen ist, in der ein zylinderförmiges Filterelement (10) zentrisch angeordnet ist.

5. Vorrichtung nach einem der vorgenannten Ansprüche, dadurch gekennzeichnet, daß die Filterkammer (9) einen tangentialen Einlaß (24) aufweist.

6. Vorrichtung nach einem der vorgenannten Ansprüche, dadurch gekennzeichnet, daß der Einlaß (24) oben angeordnet ist.

7. Vorrichtung nach einem der vorgenannten Ansprüche, dadurch gekennzeichnet, daß ein unterer Abfluß (25) zum Abzug von abgesetztem Grobschmutz vorhanden ist.

8. Vorrichtung nach einem der vorgenannten Ansprüche, dadurch gekennzeichnet, daß der untere Abfluß (25) exzentrisch angeordnet ist.

9. Vorrichtung nach einem der vorgenannten Ansprüche, dadurch gekennzeichnet, daß der untere Abfluß (25) tangential angeordnet ist.

10. Vorrichtung nach einem der vorgenannten Ansprüche, dadurch gekennzeichnet, daß ein zentrischer Reinphasenablauf (23) vorgesehen ist.

11. Vorrichtung nach einem der vorgenannten Ansprüche, dadurch gekennzeichnet, daß ein Auffangbehälter unter dem Reinphasenablauf (23) angeordnet ist.

12. Vorrichtung nach einem der vorgenannten Ansprüche, dadurch gekennzeichnet, daß das Gehäuse (2) der Filterkammer (9) eine Hülse (5), zwei Endflansche (3, 4) und Spannelemente (6) umfaßt.

13. Vorrichtung nach einem der vorgenannten Ansprüche, dadurch gekennzeichnet, daß ein Zwischenstück (20) zwischen dem Filtergehäuse (2) und einem Antriebsmotor (19) vorgesehen ist.

14. Maschine zur Metallbearbeitung mit einem Kühlschmiermittel-Kreislauf, dadurch gekennzeichnet, daß eine Vorrichtung zur Trennung eines Phasengemisches einer festen und einer flüssigen Phase gemäß einem der vorgenannten Ansprüche vorhanden ist.
